# NEW EUROPEAN PATENT SPECIFICATION

(11) **EP 2 807 345 B2**
(45) Date of publication and mention of the opposition decision: **18.11.2020**
(45) Mention of the grant of the patent: 07.03.2018
(21) Application number: 13796982.0
(22) Date of filing: 16.01.2013
(51) Int. Cl.: F01D 17/08, F01D 11/02, F01D 3/00, F16J 15/44

(54) **THRUST BALANCE SYSTEM FOR GAS TURBINE ENGINE**
SCHUBAUSGLEICHSSYSTEM FÜR GASTURBINENMOTOR
SYSTÈME D'ÉQUILIBRAGE DE POUSSÉE POUR MOTEUR DE TURBINE À GAZ

(30) Priority: 27.01.2012 US 201261591434 P; 12.04.2012 US 201213444898
(43) Date of publication of application: 03.12.2014
(73) Proprietor: United Technologies Corporation, Farmington, CT 06032 (US)
(72) Inventor: GLAHN, Jorn A., Manchester, Connecticut 06042 (US); ACKERMANN, William K., East Hartford, Connecticut 06118 (US); STRIPINIS, Philip S., Rocky Hill, Connecticut 06067 (US); SCHMITZ, John T., West Hartford, Connecticut 06117 (US); CRAWLEY, JR, Clifton J., Glastonbury, Connecticut 06033 (US)
(74) Representative: Dehns
(86) International application number: PCT/US2013/021711
(87) International publication number: WO 2013/180762

(56) References cited:
- EP-A2- 2 295 763
- EP-A2- 2 570 633
- US-A- 2 647 684
- US-A- 3 121 526
- US-A- 3 433 020
- US-A- 5 107 676
- US-A- 5 284 347
- US-A1- 2007 007 730
- US-A1- 2008 265 513
- US-A1- 2008 265 513
- US-A1- 2009 067 984
- US-B1- 6 193 462
- US-B2- 8 381 533

## Description

### BACKGROUND OF THE INVENTION

This application relates to a thrust balancing chamber in a gas turbine engine that has reduced leakage.

Gas turbine engines are known, and typically include a fan delivering air into a compressor, and also outwardly of the compressor as bypass air. The air is compressed in the compressor and delivered downstream into a combustion section where it is mixed with fuel and ignited. Products of this combustion pass downstream over turbine rotors, driving the turbine rotors to rotate. The turbine rotors in turn rotate the compressors and fan. Recently, a gear reduction has been provided between a low pressure (or low spool) compressor and the fan such that a low pressure (or low spool) turbine can drive both of these components but at different speeds.

There are a number of thrust balancing surfaces within a gas turbine engine. Historically, some of these have been formed into cavities sealed by contact seals such as knife edge or brush seals to help control bearing thrust loads. Unfortunately, such seals are either prone to leakage (KE seals) or significantly deteriorate over time (brush seals). Both characteristics lower the effectiveness of the enclosed thrust balance cavity to moderate the baseline thrust load.

A prior art gas turbine engine having the features of the preamble to claim 1 is disclosed in US 2,647,684. Prior art sealing methods for use in gas turbine engines are disclosed in US 2008/0265513 and US 2007/0007730.

### SUMMARY OF THE INVENTION

The present invention provides a gas turbine engine in accordance with claim 1.

In another embodiment according to any of the previous embodiments, the spring force is created by an arm structure.

In another embodiment according to any of the previous embodiments, high pressure air is delivered into a cavity within each non-contact seal to drive the shoe toward an opposed surface.

In another embodiment according to any of the previous embodiments, a dynamic pressure between the seals and the opposed surfaces tends to bias the shoes away from the surfaces.

In another embodiment according to any of the previous embodiments, the seal is attached to the static structure, and the surface is a rotating surface that rotates with one of the compressor and turbine sections.

In another embodiment according to any of the previous embodiments, the shoe and the carrier are formed in segments.

In another embodiment according to any of the previous embodiments, at least one of the first and second non-contact seals sealing on a surface which is radially inwardly of the at least one of the first and second non-contact seals.

In another embodiment according to any of the previous embodiments, at least one of the first and second non-contact seals sealing on a surface which is radially outwardly of the at least one of the first and second non-contact seals.

In another embodiment according to any of the previous embodiments, the thrust balance chamber is defined at a most upstream turbine blade row in the turbine section.

In another embodiment according to any of the previous embodiments, the gas turbine engine has a fan and a compressor section. The compressor section includes a low pressure compressor and a high pressure compressor. The turbine section includes a high pressure turbine, and a low pressure turbine. The low pressure turbine drives the low pressure compressor, and drives the fan through the gear reduction. The high pressure turbine drives the high pressure compressor. At least one thrust balance chamber is defined within one of the fan, compressor and turbine sections. The rotating component that is part of at least one of the compressor section and the turbine section.

In another embodiment according to any of the previous embodiments, high pressure air is delivered into a cavity within each non-contact seal to drive the shoe toward an opposed surface.

In another embodiment according to any of the previous embodiments, the thrust balance chamber in combination with many other thrust balance chambers counteracts the net load developed by the combination of all the thrust surfaces within the other modules.

These and other features of the invention would be better understood from the following specifications and drawings, the following of which is a brief description.

### BRIEF DESCRIPTION OF THE DRAWINGS

Figure 1 schematically shows a gas turbine engine.
Figure 2 shows a thrust balancing chamber in a gas turbine engine.
Figure 3 is a view of a portion of a self-adjusting non-contact seal.
Figure 4 is a force diagram of one example of such a non-contact seal.
Figure 5 shows an alternative embodiment.

### DETAILED DESCRIPTION

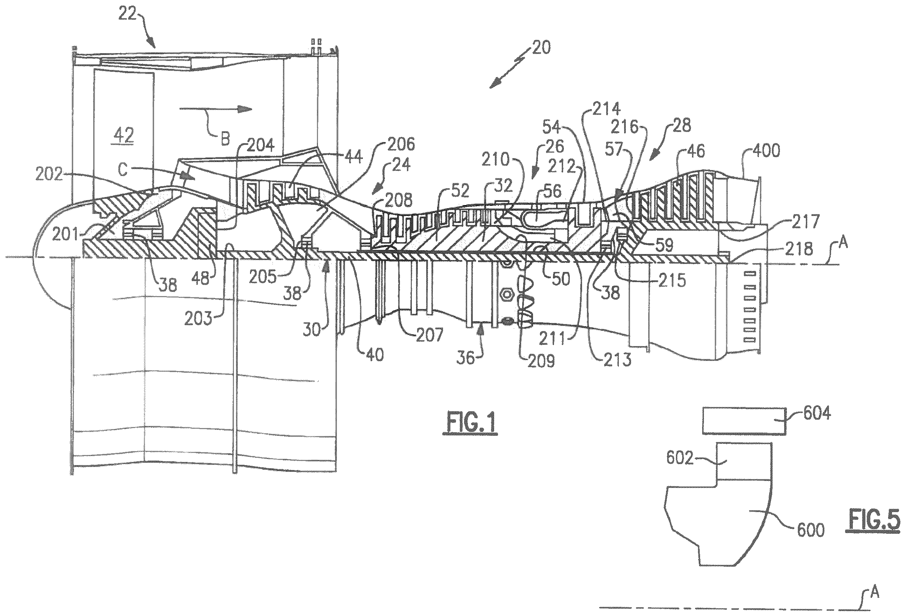

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 where fuel is added, mixed, and burned and then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. The terms "high" and "low" as utilized with reference to speed or pressure are relative to each other. The compressor and turbine associated with the "high" spool 32 operates at higher pressure and speeds than does the compressor and turbine associated with the "low" spool. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes. The shafts can be either co-rotating or counter-rotating.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion. most upstream turbine blade row in a high pressure turbine 54. The surface 91 is a thrust balancing surface, and due to the pressure in chamber 90, may equal out an opposed forward-facing thrust surface associated with the compressor.

The fan and compressor are collectively known as "air moving sections" for purposes of this application. Further note that the disclosure applies to an enclosed thrust balance cavity with reduced pressure as well as to an enclosed cavity with increased pressure. In addition, more than one cavity may also exist on a particular thrust balance face.

Chambers which utilize the non-contact seals of this invention are the paired locations 215/216 (front low pressure turbine cavity), and 217/218 (rear low pressure turbine cavity).

When in accordance with the invention a chamber 90 is utilized in a gas turbine engine provided with a gear reduction between the low pressure compressor and fan, it is often the case that the overall radial envelope of the turbine section is reduced because the low spool can rotate faster since it is no longer speed-limited by the diameter of the fan. This requires a higher pressure in the chamber 90 to counteract this effect than in the prior art. In the prior art, the chamber 90 was sealed with contacting seals wherein a static seal surface contacted rotating surfaces of the rotor 82. Knife edge seals which abut abradable or solid sealed members have been utilized, as well as brush seals or finger seals. Many such contacting seals are prone to wear, and all have undesirable worn-in leakage characteristics. These become particularly acute when the pressure in the chamber 90 increases, as mentioned above. Therefore, there are synergistic benefits when using such seals in an engine having a gear reduction to drive the fan.

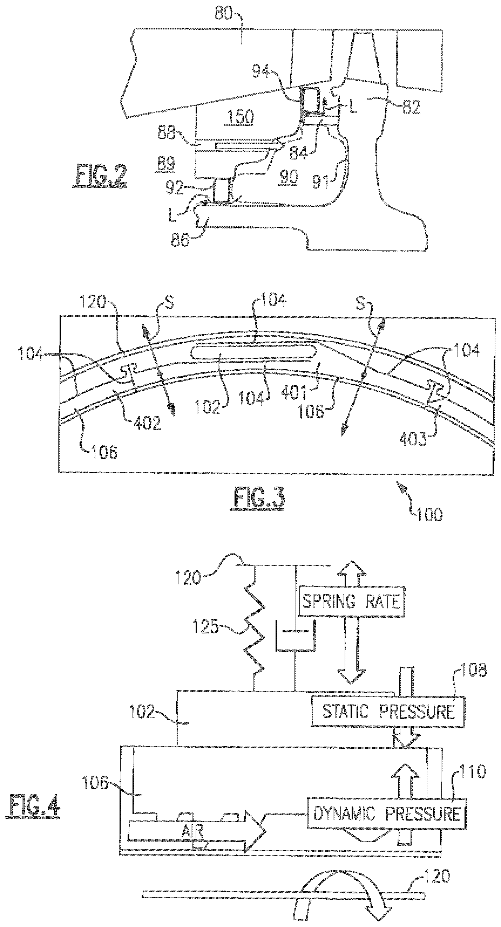

As shown in Figure 2, an outer flow engine core 80 delivers products of combustion to the rotor section 82. A source of air 89, which may be the high pressure compressor 52, as shown in Figure 1, delivers high pressure air to an inlet 88 to the chamber 90. Inlet 88 may be a tangential on-board injector used as a means to pre-swirl the air entering the cavity or a simple hole or other conduit or passage, as often utilized at various locations within a gas turbine engine. The air within chamber 90 is designed to be at a relatively high or low pressure such that the force balance as mentioned above is achieved. A radially outer seal 94 and inner seal 92 seal chamber 90.

Seals 92 and 94 may be non-contact seals or self-adjusting non-contact seals. Seals 92 and 94 are mounted in a static housing 150. The seals are intended to prevent or limit leakage paths L. The non-contacting seals will be longer-lived than the prior art contact seals, and will behave in the same manner) and non-axisymmetric (each shoe of the ring behaves independent of its neighbors) clearances. As such, these seals achieve very low leakage rates which enable the provision of thrust balance cavities in an effective and efficient manner.

While the seals are shown on the static housing 150, they may also rotate with rotor 82 and seal on static housing 150. While one particular seal is shown, other types of seals may be utilized. The HALO™ type seal has been proposed in gas turbine engines, but not as combined inner and outer seals for a thrust balance chamber.

Figure 5 shows an embodiment wherein the seal 602 is biased outwardly towards a surface 604, and away from a rotational centerline A. In this embodiment, the seal is mounted on a component 600, and seals relative to a component 604. Either component 604 or 600 may be rotating with the other static. Thus, the seals envisioned by this application can either seal radially outwardly or radially inwardly, and can be mounted to either of the static or rotating structure.

Although embodiments of this invention have been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a fan (42);
a compressor section (24), said compressor section (24) including a low pressure compressor (44) and a high pressure compressor (52);
a turbine section (28), wherein the fan (42) and compressor section (24) are upstream of the turbine section (28), said turbine section (28) comprising a high pressure turbine (54), and a low pressure turbine (46), and said low pressure turbine (46) driving said low pressure compressor (44), and said high pressure turbine (54) driving said high pressure compressor (52);
a thrust balance chamber (90) defined within said turbine section (22, 24, 28), said thrust balance chamber (90) being defined between a static structure (150) and a rotating component that is part of said turbine section (28);
**characterised by**:
said thrust balance chamber (90) being sealed by a first non-contact seal (92) at a radially inner location and a second non-contact seal (94) at a radially outer location, wherein said low pressure turbine (46) drives the fan (22) through a gear reduction (48), and said first and second non-contact seals (92, 94) each include a shoe (106) which is biased radially inwardly and outwardly relative to a carrier (120) at least in part based upon a spring force (S; 125); and wherein
said thrust balance chamber (90) is defined in a front low pressure turbine cavity (215/216) or a rear low pressure turbine cavity (217/218).

2. The gas turbine engine (20) as set forth in claim 1, wherein the spring force (S; 125) is created by an arm structure.

3. The gas turbine engine (20) as set forth in claim 1 or 2, wherein high pressure air is delivered into a cavity (102) within each said non-contact seals (92; 94) to drive said shoes (106) toward an opposed surface.

4. The gas turbine engine (20) as set forth in claim 3, wherein a dynamic pressure (110) between the seals (92, 94) and the opposed surfaces tends to bias said shoes (106) away from said surfaces.

5. The gas turbine engine (20) as set forth in claim 4, wherein said seals (92, 94) are attached to said static structure (150), and said surfaces are rotating surfaces that rotate with the turbine section (22, 24, 28).

6. The gas turbine engine (20) as set forth in any preceding claim, wherein said shoe (106) and said carrier (120) are formed in segments (401, 402, 403).

7. The gas turbine engine (20) as set forth in any preceding claim, wherein at least one of said first and second non-contact seals (92, 94) sealing on a surface which is radially inwardly of said at least one of said first and second non-contact seals (92, 94).

8. The gas turbine engine (20) as set forth in any of claims 1 to 6, wherein at least one of said first and second non-contact seals (92, 94) sealing on a surface which is radially outwardly of said at least one of said first and second non-contact seals (92, 94).

9. The gas turbine engine (20) as set forth in any preceding claim, wherein said thrust balance chamber (90) in combination with many other thrust balance chambers (90) counteracts the net load developed by the combination of all the thrust surfaces within said other modules.

## Patentansprüche

1. Gasturbinenmotor (20), der Folgendes umfasst:
ein Gebläse (42);
einen Verdichterabschnitt (24), wobei der Verdichterabschnitt (24) einen Niederdruckverdichter (44) und einen Hochdruckverdichter (52) beinhaltet;
einen Turbinenabschnitt (28), wobei sich das Gebläse (42) und der Verdichterabschnitt (24) stromaufwärts von dem Turbinenabschnitt (28) befinden, der Turbinenabschnitt (28) eine Hochdruckturbine (54) und eine Niederdruckturbine (46) umfasst und die Niederdruckturbine (46) den Niederdruckverdichter (44) antreibt und die Hochdruckturbine (54) den Hochdruckverdichter (52) antreibt;
eine Schubausgleichskammer (90), die in dem Turbinenabschnitt (22, 24, 28) definiert ist, wobei die Schubausgleichskammer (90) zwischen einer statischen Struktur (150) und einer drehenden Komponente definiert ist, die Teil des Turbinenabschnitts (28) ist;
**dadurch gekennzeichnet, dass**
die Schubausgleichkammer (90) durch eine erste kontaktfreie Dichtung (92) an einer radial inneren Position und eine zweite kontaktfreie Dichtung (94) an einer radial äußeren Position abgedichtet ist, wobei die Niederdruckturbine (46) das Gebläse (22) durch ein Untersetzungsgetriebe (48) antreibt, und die erste und zweite kontaktfreie Dichtung (92, 94) jeweils einen Schuh (106) beinhalten, der im Verhältnis zu einem Träger (120) wenigstens teilweise auf Grundlage einer Federkraft (S; 125) radial nach innen und nach außen vorgespannt ist; und wobei
die Schubausgleichskammer (90) in einem vorderen Niederdruckturbinenhohlraum (215/216) oder einem hinteren Niederdruckturbinenhohlraum (217/218) definiert ist.

2. Gasturbinenmotor (20) nach Anspruch 1, wobei die Federkraft (S; 125) durch eine Armstruktur erzeugt wird.

3. Gasturbinenmotor (20) nach Anspruch 1 oder 2, wobei Hochdruckluft in einen Hohlraum (102) in jeder der kontaktfreien Dichtungen (92; 94) geleitet wird, um die Schuhe (106) zu einer gegenüberliegenden Fläche hin zu treiben.

4. Gasturbinenmotor (20) nach Anspruch 3, wobei ein dynamischer Druck (110) zwischen den Dichtungen (92, 94) und den gegenüberliegenden Flächen dazu neigt, die Schuhe (106) von den Flächen weg vorzuspannen.

5. Gasturbinenmotor (20) nach Anspruch 4, wobei die Dichtungen (92, 94) an der statischen Struktur (150) angebracht sind und die Flächen drehende Flächen sind, die sich mit dem Turbinenabschnitt (22, 24, 28) drehen.

6. Gasturbinenmotor (20) nach einem der vorangehenden Ansprüche, wobei der Schuh (106) und der Träger (120) in Segmenten (401, 402, 403) gebildet sind.

7. Gasturbinenmotor (20) nach einem der vorangehenden Ansprüche, wobei wenigstens eine von der ersten und zweiten kontaktfreien Dichtung (92, 94) an einer Fläche abdichtet, die radial innerhalb von wenigstens einer von der ersten und zweiten kontaktfreien Dichtung (92, 94) liegt.

8. Gasturbinenmotor (20) nach einem der Ansprüche 1 bis 6, wobei wenigstens eine von der ersten und zweiten kontaktfreien Dichtung (92, 94) an einer Fläche abdichtet, die radial außerhalb von wenigstens einer von der ersten und zweiten kontaktfreien Dichtung (92, 94) liegt.

9. Gasturbinenmotor (20) nach einem der vorangehenden Ansprüche, wobei die Schubausgleichskammer (90) in Kombination mit vielen weiteren Schubausgleichskammern (90) der Nettolast entgegenwirkt, die durch die Kombination aller Schubflächen in den weiteren Modulen erzeugt wird.

## Revendications

1. Moteur à turbine à gaz (20) comprenant :
une soufflante (42) ;
une section de compresseur (24), ladite section de compresseur (24) comportant un compresseur basse pression (44) et un compresseur haute pression (52) ;
une section de turbine (28), dans lequel la soufflante (42) et la section de compresseur (24) sont situées en amont de la section de turbine (28), ladite section de turbine (28) comprenant une turbine haute pression (54), et une turbine basse pression (46), et ladite turbine basse pression (46) entraînant ledit compresseur basse pression (44), et ladite turbine haute pression (54) entraînant ledit compresseur haute pression (52) ;
une chambre d'équilibrage de poussée (90) définie à l'intérieur de ladite section de turbine (22, 24, 28), ladite chambre d'équilibrage de poussée (90) étant définie entre une structure statique (150) et un composant en rotation qui fait partie de ladite section de turbine (28) ;
**caractérisé en ce que** :
ladite chambre d'équilibrage de poussée (90) étant étanchéifiée par un premier joint sans contact (92) au niveau d'un emplacement radialement intérieur et un second joint sans contact (94) au niveau d'un emplacement radialement extérieur, dans lequel ladite turbine basse pression (46) entraîne la soufflante (22) à travers une réduction d'engrenage (48), et lesdits premier et second joints sans contact (92, 94) comportent chacun un patin (106) qui est sollicité radialement vers l'intérieur et vers l'extérieur par rapport à un support (120) au moins en partie basé sur une force de ressort (S ; 125) ;et dans lequel
ladite chambre d'équilibrage de poussée (90) est définie dans une cavité avant de turbine basse pression (215/216) ou une cavité arrière de turbine basse pression (217/218).

2. Moteur à turbine à gaz (20) selon la revendication 1, dans lequel la force de ressort (S ;125) est créée par une structure à bras.

3. Moteur à turbine à gaz (20) selon la revendication 1 ou 2, dans lequel de l'air à haute pression est délivré dans une cavité (102) à l'intérieur de chacun desdits joints sans contact (92 ; 94) afin d'entraîner lesdits patins (106) vers une surface opposée.

4. Moteur à turbine à gaz (20) selon la revendication 3, dans lequel une pression dynamique (110) entre les joints (92 ; 94) et les surfaces opposées tendent à faire dévier lesdits patins (106) desdites surfaces.

5. Moteur à turbine à gaz (20) selon la revendication 4, dans lequel lesdits joints (92, 94) sont fixés à ladite structure statique (150), et lesdites surfaces sont des surfaces de rotation qui tournent avec la section de turbine (22, 24, 28).

6. Moteur à turbine à gaz (20) selon une quelconque revendication précédente, dans lequel ledit patin (106) et ledit support (120) sont formés par segments (401, 402, 403).

7. Moteur à turbine à gaz (20) selon une quelconque revendication précédente, dans lequel au moins un desdits premier et second joints sans contact (92, 94) assure l'étanchéité sur une surface qui est radialement vers l'intérieur dudit au moins un desdits premier et second joints sans contact (92, 94).

8. Moteur à turbine à gaz (20) selon l'une quelconque des revendications 1 à 6, dans lequel au moins un desdits premier et second joints sans contact (92, 94) assure l'étanchéité sur une surface qui est radialement vers l'extérieur dudit au moins un desdits premier et second joints sans contact (92, 94).

9. Moteur à turbine à gaz (20) selon une quelconque revendication précédente, dans lequel ladite chambre d'équilibrage de poussée (90) en combinaison avec de nombreuses autres chambres d'équilibrage de poussée (90) contrebalance la charge nette développée par la combinaison de toutes les surfaces de poussée à l'intérieur desdits autres modules.
